# EUROPEAN PATENT APPLICATION

(11) **EP 3 709 524 A1**
(43) Date of publication of application: **16.09.2020**
(21) Application number: 19162763.7
(22) Date of filing: 14.03.2019
(51) Int. Cl.: H04B 5/00

(54) **ANTENNA DEVICE AND ASSOCIATED APPARATUS**

(71) Applicant: STMicroelectronics Austria GmbH, 8020 Graz (AT)
(72) Inventor: ANTONETTI, Francesco, 8010 GRAZ (AT); POETSCHER, Thomas, 8121 DEUTSCHFEISTRITZ (AT)
(74) Representative: Casalonga

(57) **Abstract**

The antenna device (10) for wireless power charging and/or near-field communication "NFC" comprises two sets (13, 14) of electrically conductive loops, a first set (13) of loops being configured to form a NFC antenna and the first and second (14) sets of loops being configured to form together a wireless power charging antenna.

## Description

Various embodiments of the invention relate to antennas for communications apparatus, in particular antennas for near-field communications (NFC ("Near Field Communication")) and Wireless Power Transfer, for example the one meeting the requirements of the Qi standard.

Near field communication, better known to those skilled in the art under the name NFC (Near Field Communication), is a wireless connectivity technology that allows communication over a short distance, for example 10 cm, between electronic devices, such as contactless smart cards or tags, and readers.

More generally, NFC technology is a technology standardized by the NFC Forum consortium.

NFC technology is particularly suitable for connecting any type of user device and allows for quick and easy communications.

NFC technology is an open standard technology platform defined in ISO / IEC 18092 and ISO / IEC 21481 but incorporates many existing standards such as the Type A and Type B protocols defined in ISO-14443 which can be communication protocols that can be used in NFC technology.

When transmitting information between a reader and an electronic device transponder, the reader generates a magnetic field via its antenna which is generally in the standards conventionally used, a sine wave (the carrier) at 13.56 MHz.

Wireless Power transfer technology enables contactless transfer of energy from a power source (eg a charger) to a load or receiver, for example a wireless communication device, such as a telephone cellular mobile, through the air gap separating the charger and the receiver, for example to recharge a battery thereof.

Among the various non-contact charging standards that exist, mention may be made of the Qi standard developed by the "Wireless Power Consortium" (WPC), well known to those skilled in the art, and in particular the low power version ("low power") currently deliver power up to 15W.

For all intents and purposes, those skilled in the art may refer to the WPC document entitled "The Qi Wireless Power Transfer System Power Class 0 Specification" parts1-4, Version 1.2.4, February 2018.

In short, the non-contact energy is transferred from a base station or transmitter to a receiver magnetically coupled to the transmitter via, for example, coils.

The energy transfer is based on a magnetic field generated by the transmitter and captured by the receiver via a resonant inductive coupling.

The Qi standard allows different techniques (topologies) to generate the magnetic field on the transmitter side. But, this magnetic field is always an oscillating field and the frequency range of the signal generated by the charger to transfer energy is between 80 KHz and 300 KHz. This signal, which is used to transfer the energy to the receiver, is also called the carrier signal because it can be also used, via modulation, for the exchange, between the transmitter and the receiver, of information relating in particular to the level of transmission of energy required by the receiver.

The receiver converts this magnetic field into an electrical potential used to charge the batteries or power a device.

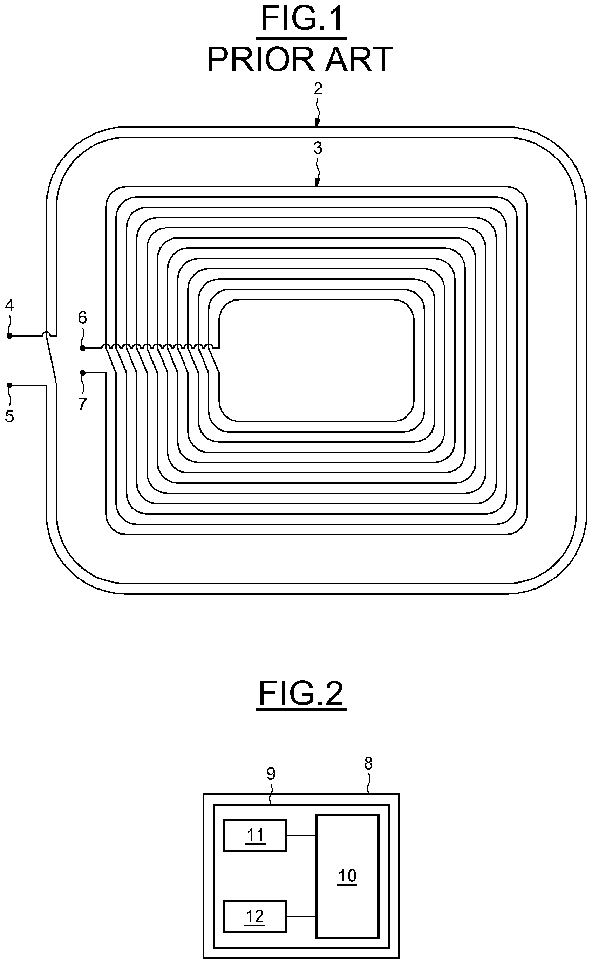

In general, devices of the prior art such as mobile phones may implement a first antenna for NFC and a second antenna for wireless charging such as illustrated on figure 1.

The first antenna 2 configured for NFC surrounds the second antenna 3 configured for Qi non contact power transfer.

Both antennas 2, 3 comprise coils and two terminals 4, 5, 6 and 7.

However, the location of two dedicated antennas for NFC and Qi in a mobile device such a mobile phone needs a large surface which is not always available or leads to compromises which can degrade the mobile phone performances.

Further although NFC devices use magnetic loop antennas for transferring information and Qi devices use magnetic loop antennas for transferring power from a power transmitter to a power receiver, concurrent NFC and Qi operations are not possible in the prior art devices because the high voltage on the Qi antenna device interferes and degrades the performance of the NFC antenna device.

Moreover, in case of a small NFC antenna on the receiver side, the performance of NFC is degraded.

The document EP3211805 discloses a first antenna collecting energy from a radio frequency signal receiver, and a second antenna dedicated to NFC communications signals.

The first antenna has a first set of loops and the second antenna has a second set of loops. Both set of loops have a common part, reducing the implantation surface of the antennas.

The first antenna is configured to operate according to the A4WP standard developed by the Alliance for Wireless Power.

Various A4WP embodiments operate at 6.78 MHz, which is relatively close to frequencies used in NFC communications, typically 13.56 MHz. The power transfer signal corrupts thus the NFC signal and concurrent NFC and power transfer operations are not possible due to the close operating frequencies.

Moreover, the first antenna operates only as a receiving antenna.

In addition, due to high voltage, the Qi signal would corrupt the NFC communication if the first and second antennas operate concurrently NFC and Qi operations.

There is a need for an antenna device able to concurrently operate NFC and wireless power transfer operations in particular Qi operations without corrupting the NFC signal and being used for transmitter and receiver apparatus.

According to implementations and embodiments, it is advantageously proposed an antenna device comprising two set of loops capable of operating concurrently to achieve NFC and wireless power transfer operations, in particular Qi operations.

According to an aspect, an antenna device for wireless power charging and/or near-field communication "NFC" is proposed, comprising two sets of electrically conductive loops, a first set of loops being configured to form a NFC antenna and the first and second sets of loops being configured to form together a wireless power charging antenna.

Contrary to the prior art in which the antennas share only some loops, all the loops of the NFC antenna are used to form with the second set of loops the said wireless power charging antenna.

The antenna device operating NFC and Qi operations saves space compared with the prior art.

Said NFC antenna and said wireless power charging antenna are configured to be capable to operate concurrently.

The antenna device can advantageously operate concurrently wireless power charging operations and NFC operations without corrupting the NFC signal.

According to an embodiment, the second set of loops is surrounded by the first set of loops, the two sets of loops being connected together.

According to a variant, the first and second sets of loops are configured to create a virtual ground.

Such a virtual ground permits advantageously to avoid high voltage conditions.

Thus the NFC signal is not corrupted with wireless power transfer operations.

The virtual ground may be obtained for example by a symmetrical topology of the antenna device.

In other words, the symmetrical topology of the antenna device creates a virtual ground avoiding high voltage conditions so that the NFC signal is not corrupted.

According to an embodiment, the antenna device has a symmetrical topology.

According to an embodiment, the second set of loops comprises a first part and second part and the first set of loops is connected between the said first and second parts.

According to an embodiment, both sets of loops form a rectangle.

Each end of both set of loops comprises a connecting point.

The connecting points of the first set of loops are connected to loops of the second set of loops so that the loops of both sets of loops are connected in series.

The connecting points of both set of loops are disposed symmetrically in relation to a center axis parallel to the larger dimension of the rectangle.

The connecting points of the second set of loops are configured to be connected with terminals of a wireless power charging driver circuit and the connecting points of the first set of loops being configured to be connected with terminals of a NFC driver circuit.

According to another variant, the first and second sets of loops are configured to share a same ground connection in order to form a voltage divider.

The voltage difference at the output of the NFC antenna and the wireless power charging antenna is thus reduced so that the NFC antenna can operate in proximity of the wireless power charging antenna.

According to an embodiment, both set of loops are connected in series and form an Archimedean spiral.

Each end of the Archimedean spiral comprises a connecting point.

The connecting point inside the Archimedean spiral is configured to be connected with a wireless power charging driver circuit, the connecting point of both set of loops is configured to be connected with a NFC driver circuit and the connecting point outside the Archimedean spiral is configured to be connected with a common ground of the driver circuits.

The common ground connection reduces the high voltage on the Qi antenna connecting points so that the NFC signal is not corrupted.

According to an embodiment, the NFC antenna is configured to communicate with a NFC circuit at a first frequency.

According to an embodiment, the wireless power charging antenna is configured to communicate with a wireless power charging circuit at a second frequency.

The second frequency is for example lower than the first frequency.

The first frequency is for example equal to 13.56 MHz and the second frequency is for example in the range of 80 KHz to 300 KHz.

In other words, the wireless power charging antenna is configured to operate according to the Qi standard.

The fact that the first and second frequencies are far enough apart from each other, contribute to the fact that the NFC antenna and the Qi antenna are capable to operate concurrently.

According to another aspect, an apparatus is proposed, comprising at least one antenna device as defined above, a wireless power charging driver circuit and a NFC driver circuit, the at least one antenna device being connected to the wireless power charging driver circuit and to the NFC driver circuit.

The apparatus may operate as a power receiving device or as a power transmitter device.

The apparatus may further comprise at least one conventional wireless power charging antenna connected to the wireless power charging driver circuit.

Multiple antennas may be used to establish the best NFC and/or power transfer connection between reader and/or charging device and mobile device.

According to another aspect, a mobile phone is proposed, incorporating an apparatus as defined above.

Other advantages and features of the invention will appear on examination of the detailed description of embodiments, in no way restrictive, and the appended drawings in which:
- Figure 1, previously described, illustrates an NFC and Qi antenna devices cording to the prior art; and
- Figures 2 to 8 illustrate particular embodiments of the invention.

Reference is made to figure 2 which represents a mobile phone 8 incorporating an example of an apparatus 9 comprising an antenna device for wireless power charging and/or near-field communication "NFC" 10 connected to a wireless power charging driver circuit 11 and a NFC driver circuit 12.

Although the apparatus 9 is incorporated in a mobile phone, the apparatus can be incorporated in any mobile device operating wireless power charging and/or near-field communication "NFC".

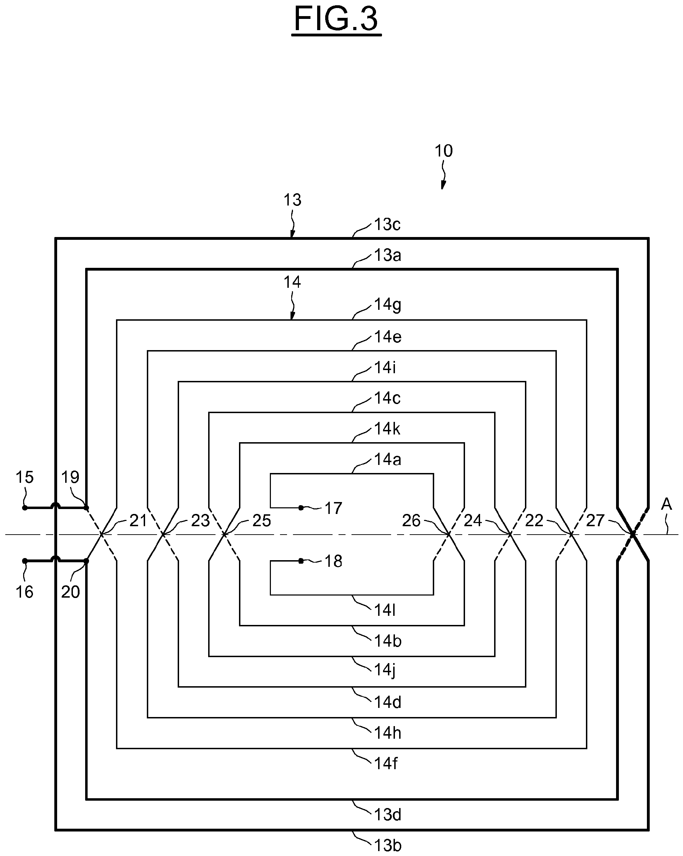

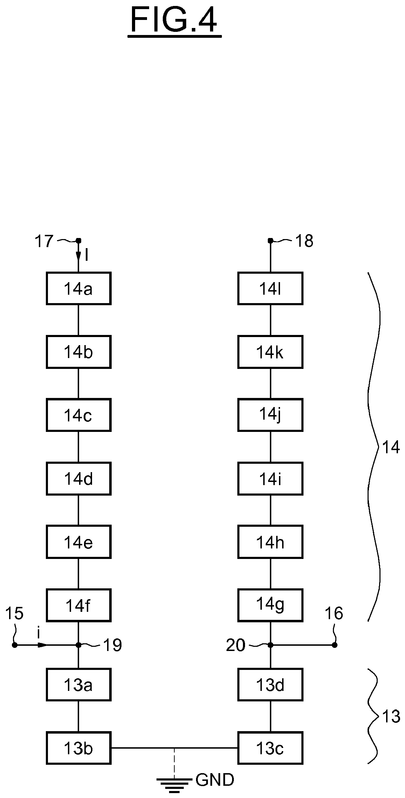

Figures 3 and 4 illustrate a first embodiment of the antenna device for wireless power charging and/or near-field communication "NFC" 10.

The antenna device 10 comprises two sets of electrically conductive loops 13 and 14, a first set of loops 13 being configured to form a NFC antenna and the first 13 and second 14 sets of loops being configured to form together a wireless power charging antenna.

The second set of loops 14 is surrounded by the first set of loops 13. The two sets of loops are connected together.

The first and second sets of loops 13 and 14 form a rectangle.

The first 13 and second 14 sets of loops comprise at each end a connecting point 15, 16, 17 and 18.

The connecting points 17 and 18 of the second set of loops 14 are localized in the center of the second set of loops.

The connecting points 15 and 16 of the first set of loops 13 are connected with terminals of a NFC driver circuit 12 and the connecting points 17 and 18 are connected with terminals of a wireless power charging driver circuit 11.

The second set of loops 14 comprises a first part comprising three loops comprising half-loops 14a to 14f extending around the center of the antenna device 10 in a clockwise direction starting from the connecting point 17 to a connecting point 19, and a second part comprising half-loops 14g to 141 extending around the center of the antenna device 10 in a clockwise direction starting from a connecting point 20 at the free end of the half-loop 14g to the connecting point 17.

The connecting points 19 and 20 are connected to the connecting points 15 and 16.

The half-loop 14g cross over the half-loop 14f at point 21, the half-loop 14h cross under the half-loop 14e at point 22, the half-loop 14i cross over the half-loop 14d at point 23, the half-loop 14j cross under the half-loop 14c at point 24, the half-loop 14k cross over the half-loop 14b at point 25 and the half-loop 141 cross under the half-loop 14a at point 26.

The first set of loops 13 comprises two loops comprising four half-loops 13a, 13b, 13c and 13d extending around the second set of loops 14 in a clockwise direction starting from the connecting point 19 to the connecting point 20.

The half-loop 13c cross under the half-loop 13a at point 27.

As illustrated on figure 4, the first set of loops 13 is connected between the first and second parts of the second set of loops 14.

The connecting points 15 and 16 of the first set of loops are connected to loops 14f and 14g of the second set of loops 14 so that the loops of both sets of loops are connected in series.

The connecting points 19 and 20 of both set of loops are disposed symmetrically in relation to a center axis A parallel to the larger dimension of the rectangle.

The half-loops 14a and 141, 14b and 14k, 14c and 14j, 14d and 14i, 14e and 14h, 14f and 14g, 13a and 13d, 13b and 13c have the same length and are symmetrical with respect to the axis A.

During NFC and Qi operations, a current I flows in a current path from connecting point 17 to connecting point 18 via the half-loops 14a to 14f, 13a to 13d and 14g to 141 and a current I flows in a current path from connecting point 15 to connecting pint 16 via half-loops 13a to 13d.

The half-loops 14a to 14f, 13a and 13b generate a magnetic field which is countered by a magnetic field generated by the half-loops 13c, 13d and 14g to 141.

A virtual ground GND is created between the half-loops 13b and 13c avoiding high voltage conditions.

The symmetrical topology of the antenna device creates a virtual ground avoiding high voltage conditions so that the NFC signal is not corrupted.

The NFC antenna is configured to communicate with a NFC circuit at a first frequency and the wireless power charging antenna is configured to communicate with a wireless power charging circuit at a second frequency.

The wireless power charging antenna can operate in a receiving or emitting mode.

The first frequency is equal to 13.56 MHz and the second frequency is in the range of 80 KHz to 300 KHz.

Due to symmetrical antenna device 10 topology and as the first and second frequencies are far enough apart from each other, the NFC antenna and the wireless power charging antenna are capable to operate concurrently.

The antenna device 10 can also operates as an NFC antenna or as a wireless power charging antenna.

For example, the first embodiment of the antenna device 10 is included in a square having a side equal to 53.5 mm and both antennas are made of a wire having a thickness of 2 mm.

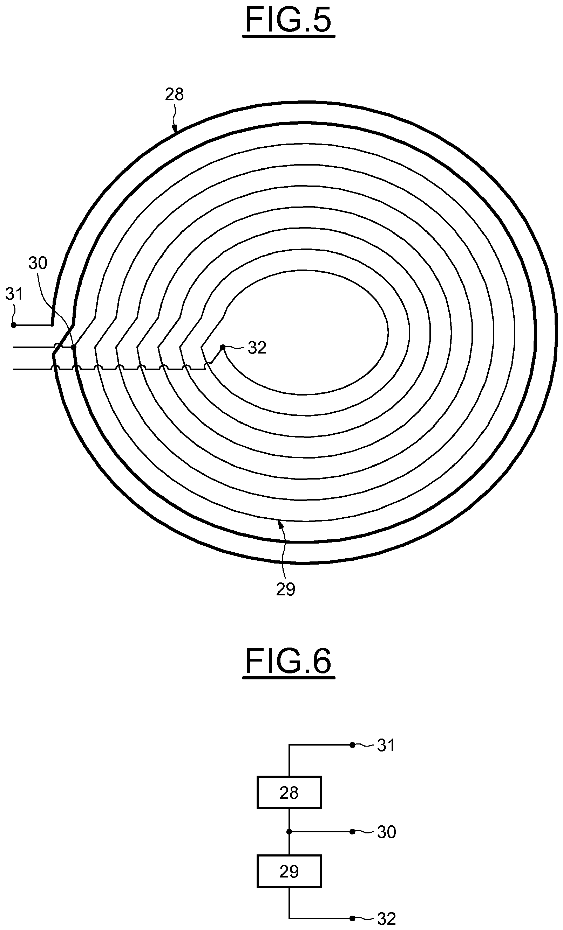

Figures 5 and 6 illustrate a second embodiment of the antenna device for wireless power charging and/or near-field communication "NFC" 10.

The antenna device 10 comprises two sets of electrically conductive loops 28 and 29. A first set of loops 28 is configured to form a NFC antenna and the first 28 and second 29 sets of loops being configured to form together a wireless power charging antenna.

The second set of loops 29 is surrounded by the first set of loops 28.

The first set of loops 28 comprises at each end a connecting point 30 and 31, and the second set of loops is connected in series with the first set of loops 28 at the connecting point 30.

The second set of loops 28 comprises a connecting point 32 at its free end.

The first and second sets of loops form an Archimedean spiral, the connecting point 32 being inside the Archimedean spiral.

The connecting point 32 inside the Archimedean spiral is connected with the wireless power charging driver circuit 11, the connecting point 30 of both set of loops is connected with a NFC driver circuit and the connecting point 31 outside the Archimedean spiral is connected with a common ground of the driver circuits 11 and 12.

The wireless power charging antenna and the NFC antenna are sharing the same ground connection connected at point 31.

The Archimedean spiral is acting as a voltage divider, the first part of the voltage divider being the first set of loops 28 and the second part of the voltage divider being the second set of loops 29.

Thus the voltage difference at the output of the NFC antenna and the wireless power charging antenna is reduced so that the NFC antenna can operate in proximity of the wireless power charging antenna.

The NFC antenna is configured to communicate with a NFC circuit at the first frequency and the wireless power charging antenna is configured to communicate with a wireless power charging circuit at the second frequency.

The wireless power charging antenna can operate in a receiving or emitting mode.

Due to the same ground connection of both antennas and as the first and second frequencies are far enough apart from each other, the NFC antenna and the wireless power charging antenna are capable to operate concurrently.

The antenna device 10 can also operates as an NFC antenna or as a wireless power charging antenna.

For example the second embodiment of the antenna device 10 is included in a square having a side equal to 53.5 mm and both antennas are made of a wire having a thickness of 2 mm.

The inductance value of the first set of loops 13, 28 is in the range 500 nH to 1.5 µH with a resistance in the range 0.2 Ω to 3 Ω, and the number of loops is preferably in the range 1 to 6.

The inductance value of the second set of loops 14, 29 is in the range 6 µH to 24 µH with a resistance in the range 0.01 Ω to 0.2 Ω, and the number of loops is preferably in the range 12 to 24 according to the value of power to be transferred or received.

The first embodiment of the antenna device 10 illustrated on figures 3 and 4 permits to transfer more power than the second embodiment of the antenna device illustrated on figures 5 and 6.

In other embodiments, the mobile phone can comprise an antenna device 10 comprising at least one antenna device according to the first and/or second embodiment illustrated on figures 3 to 6, and at least one NFC antenna device and/or Qi antenna device illustrated on figure 1.

Embodiments of the antenna device 10 comprising the first and second sets of loops 13, 14, 28 and 29 and the Qi antenna device 3 illustrated on figure 1 are described in what follows.

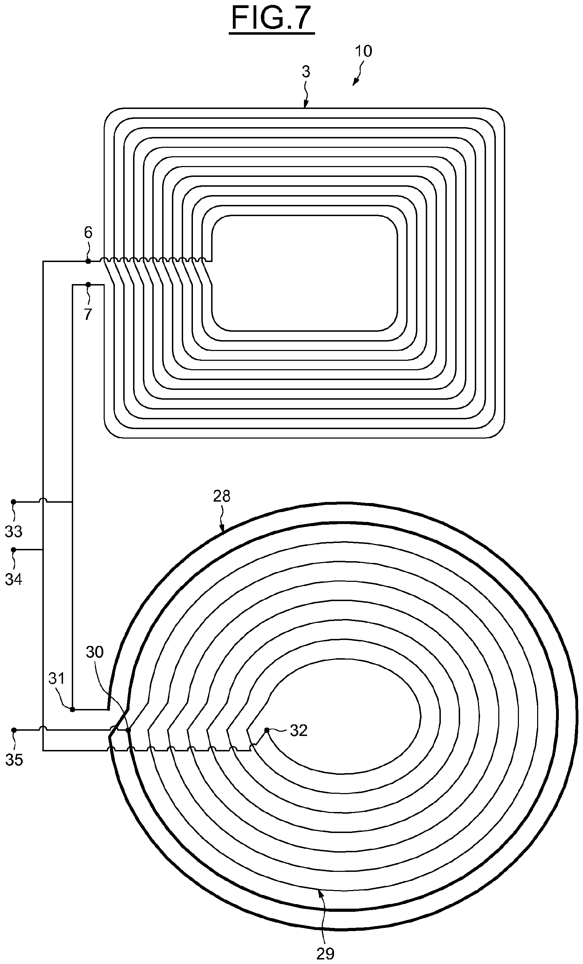

A third embodiment of the antenna device 10 for wireless power charging and/or near-field communication "NFC" combining the first and second set of loops 28, 29 as illustrated on figures 5 and 6 with the second antenna 3 configured for Qi non contact power transfer is illustrated on figure 7.

The first and second sets of loops 28 and 29 form the Archimedean.

The antenna device 10 further comprises three terminals 33, 34 and 35.

The first terminal 33 is connected with the second terminal 7 of the second antenna 3, with the connecting point 31 outside the Archimedean spiral and with the common ground of the driver circuits 11 and 12.

The second terminal 34 is connected with the wireless power charging driver circuit 11, with the connecting point 32 inside the Archimedean spiral and with the first terminal 6 of the second antenna 3.

The third terminal 35 is connected with the NFC driver circuit 12.

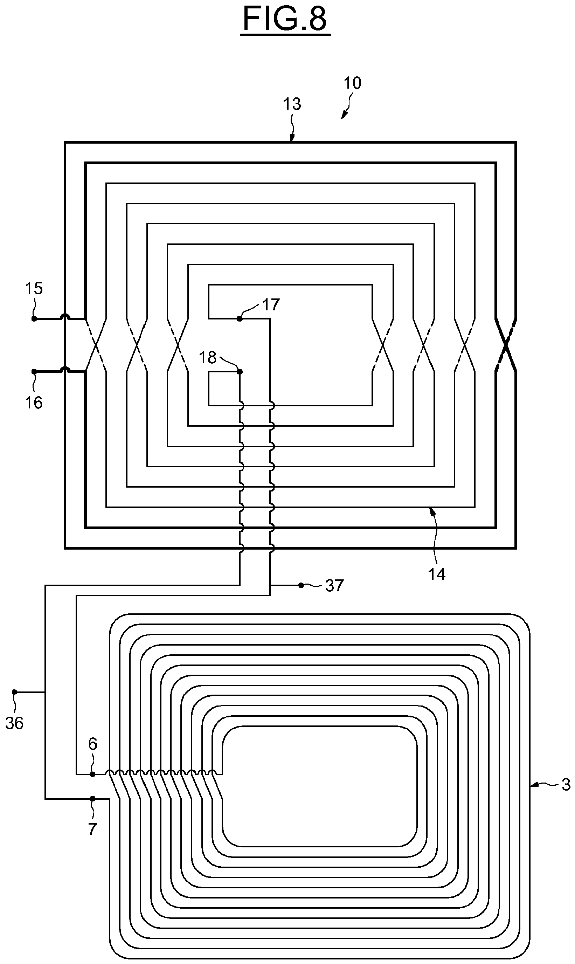

Figure 8 illustrates a fourth embodiment of the antenna device 10 for wireless power charging and/or near-field communication "NFC".

The antenna device 10 comprises the second antenna 3 configured for Qi non contact power transfer and the first and second sets of loops 13 and 14 forming a rectangle.

The antenna device 10 further comprises two terminals 36 and 37.

The first terminal 36 is connected with the second terminal 7 of the second antenna 3, with the connecting point 18 of the second set of loops 14 and with the wireless power charging driver circuit 11.

The second terminal 37 is connected with the wireless power charging driver circuit 11, with the connecting point 17 of the second set of loops 14 and with the first terminal 6 of the second antenna 3.

The connecting points 15 and 16 of the first set of loops are connected with the NFC driver circuit 12.

In another embodiment, the antenna device 10 comprises the first antenna 2 and/or the second antenna 3 and at least the first and second sets of loops in a rectangular form or forming an Archimedean.

Conventional antennas could be combined with at least one antenna device for wireless power charging and/or near-field communication "NFC" to interoperate with various mobile device antennas.

Multiple antennas could be used to establish the best NFC connection between a reader and the mobile device 8 due to different NFC antennas location in the mobile device 8.

Advantageously, the antenna device for wireless power charging and/or near-field communication "NFC" can be used on power transmitter and power receiver devices.

## Claims

1. Antenna device (10) for wireless power charging and/or near-field communication "NFC" comprising two sets (13, 14, 28, 29) of electrically conductive loops, a first set (13, 28) of loops being configured to form a NFC antenna and the first and second (14, 29) sets of loops being configured to form together a wireless power charging antenna.

2. Antenna device according to claim 1, wherein said NFC antenna and said wireless power charging antenna are configured to be capable to operate concurrently.

3. Antenna device according to claim 1 or 2, wherein the second set (14, 29) of loops is surrounded by the first set (13, 28) of loops, the two sets of loops being connected together.

4. Antenna device according to claim 3, wherein the first and second sets (13, 14) of loops are configured to create a virtual ground (GND).

5. Antenna device according to claim 4, having a symmetrical topology.

6. Antenna device according to anyone of claims 3 to 5, wherein the second set (14) of loops comprises a first part (14a, 14b, 14c, 14d, 14e, 14f) and second part (14g, 14h, 14i, 14j, 14k, 141), and the first set (13) of loops is connected between the said first and second parts.

7. Antenna device according to claim 6, in which both set (13, 14) of loops form a rectangle, each end of both set of loops comprising a connecting point (15, 16, 17, 18), the connecting points (15, 16) of the first set (13) of loops being connected to loops of the second set (14) of loops so that the loops of both sets of loops are connected in series, the connecting points (19, 20) of both set of loops being disposed symmetrically in relation to a center axis (A) parallel to the larger dimension of the rectangle, the connecting points (17, 18) of the second set of loops being configured to be connected with terminals of a wireless power charging driver circuit (11) and the connecting points (of the first set of loops being configured to be connected with terminals of a NFC driver circuit.

8. Antenna device according to claim 3, wherein the first and second sets of loops are configured to share a same ground connection in order to form a voltage divider.

9. Antenna device according to claim 8, in which both set (28, 29) of loops are connected in series and form an Archimedean spiral, each end of the Archimedean spiral comprising a connecting point (30, 31), the connecting point (31) inside the Archimedean spiral being configured to be connected with a wireless power charging driver circuit (11), the connecting point (29) of both set of loops being configured to be connected with a NFC driver circuit (12) and the connecting point (30) outside the Archimedean spiral being configured to be connected with a common ground of the driver circuits.

10. Antenna device according to any one of the preceding claims, wherein the NFC antenna is configured to communicate with a NFC circuit (12) at a first frequency.

11. Antenna device according to any one of the preceding claims, wherein the wireless power charging antenna is configured to communicate with a wireless power charging circuit (11) at a second frequency.

12. Antenna device according to claims 10 and 11, wherein the second frequency is lower than the first frequency.

13. Antenna device according to claim 12, wherein the first frequency is equal to 13.56 MHz and the second frequency is in the range of 80 KHz to 300 KHz.

14. Apparatus (9) comprising at least one antenna device (10) according to any one of the preceding claims, a wireless power charging driver circuit (11) and a NFC driver circuit (12), the at least one antenna device being connected to the wireless power charging driver circuit and to the NFC driver circuit.

15. Apparatus according to claim 14, further comprising at least one conventional wireless power charging antenna (3) connected to the wireless power charging driver circuit (11).

16. Mobile phone incorporating an apparatus according to any one of claims 14 and 15.
